# EUROPÄISCHE PATENTANMELDUNG

(11) **EP 2 551 044 A2**
(43) Veröffentlichungstag der Anmeldung: **30.01.2013**
(21) Anmeldenummer: 12176316.3
(22) Anmeldetag: 13.07.2012
(51) Int. Cl.: B23B 29/12

(54) **Werkzeugkopf sowie Verfahren zur spanenden Bearbeitung**

(30) Priorität: 28.07.2011 DE 102011052252
(71) Anmelder: Herrmann Ultraschalltechnik GmbH & Co. KG, 76307 Karlsbad (DE)
(72) Erfinder: Vogler, Ulrich, 88690 Uhldingen-Mühlhofen (DE); Brouet, Francois, 75334 Straubenhardt (DE); Faustha, Thorsten, 76359 Marxzell (DE)
(74) Vertreter: WSL Patentanwälte Partnerschaftsgesellschaft

(57) **Zusammenfassung**

Die vorliegende Erfindung betrifft einen Werkzeugkopf mit einem Maschinenanschluss zum Anschluss des Werkzeugkopfes an eine Werkzeugmaschine und einem Werkzeugabschnitt, der entweder zumindest eine geometrisch bestimmte Schneide aufweist oder eine Aufnahme für einen Werkzeugeinsatz mit einer geometrisch bestimmten Schneide aufweist. Um einen Werkzeugkopf, insbesondere einen Bohrkopf, und ein Verfahren bereitzustellen, mit dem hochpräzises Zerspanen mit sehr hohen Vorschubgeschwindigkeiten und guter Oberflächenqualität möglich ist, ohne dass die Schneide einem hohen Verschleiß ausgesetzt ist, wird erfindungsgemäß vorgeschlagen, dass ein Konverter zur Umwandlung von elektrischer Wechselspannung in eine mechanische Schwingung vorgesehen ist, wobei der Konverter derart angeordnet, ausgelegt und mit dem Werkzeugabschnitt verbunden ist, so dass mit Hilfe des Konverters die Einheit bestehend aus Konverter und Werkzeugabschnitt und gegebenenfalls einem in der Aufnahme aufgenommenen Werkzeugeinsatz zu einer Ultraschallschwingung angeregt werden kann.

## Beschreibung

Die vorliegende Erfindung betrifft einen Werkzeugkopf sowie ein Verfahren zur spanenden Bearbeitung eines Werkstückes.

Üblicherweise weist ein Werkzeugkopf einen Maschinenanschluss zum Anschluss des Werkzeugkopfes an eine Werkzeugmaschine sowie einen Werkzeugabschnitt auf. Der Werkzeugabschnitt weist entweder zumindest eine geometrisch bestimmte Schneide auf, die dafür vorgesehen ist, mit einem Werkstück in Eingriff zu treten und dieses zu bearbeiten, oder weist eine Aufnahme für einen Werkzeugeinsatz auf, der dann die geometrisch bestimmte Schneide aufweist.

Solche Werkzeugköpfe werden beispielsweise beim Bohren, Fräsen oder Drehen oder anderen Spanverfahren mit geometrisch bestimmter Schneide verwendet.

Im folgenden wird die Erfindung anhand eines Bohrkopfes erläutert, da hier die erfindungsgemäße Wirkung am stärksten ausgeprägt ist. Prinzipiell kann der Werkzeugkopf jedoch beispielsweise auch als Fräskopf oder Drehkopf ausgebildet sein.

Üblicherweise weist ein Bohrkopf einen Spindelanschluss zum Anschluss des Bohrkopfes an eine rotierbare Spindel sowie einen Werkzeugabschnitt auf. Der Werkzeugabschnitt kann entweder selbst als Bohrer ausgebildet sein oder kann eine Aufnahme für einen Bohrer aufweisen. In beiden Fällen ist es möglich, dass die Schneidkanten des Bohrers durch austauschbare Schneideinsätze gebildet werden. Der Bohrer kann beispielsweise als Spiralbohrer ausgebildet sein.

Ein solcher Bohrer hat meist einen Schaftabschnitt, der dafür vorgesehen ist, in einem entsprechenden Spannfutter, z. B. in dem genannten Bohrkopf, aufgenommen zu werden, und einen Schneidabschnitt, der dafür vorgesehen ist, mit dem zu bearbeitenden Werkstück in Eingriff zu treten. Falls der Bohrer als Spiralbohrer ausgebildet ist, weist der Schneidabschnitt mindestens eine und häufig zwei sich spiralförmig um den Schneidabschnitt windende Spannuten auf. An der Stirnfläche des Schneidabschnittes ist mindestens eine, häufig aber zwei Hauptschneidkanten für die spanende Bearbeitung vorgesehen. Die Spannuten werden umfangseitige von Nebenschneidkanten begrenzt, die aber in der Regel mit dem Werkstück nicht in Eingriff treten.

Mit solchen Bohrköpfen können in ein Werkstück kreisrunde Bohrungen eingebracht werden. Allerdings wird die Vorschubgeschwindigkeit durch den zu bearbeitenden Werkstoff, die Belastbarkeit der Schneidkanten sowie durch die gewünschte Oberflächengüte der Bohrung begrenzt.

Es ist bereits bekannt, bei besonders festen Materialen Schläge auf den Spiralbohrer in axialer Richtung in Richtung des Werkstückes aufzubringen. Mittels dieses sogenannten Schlagbohrens können entsprechende Löcher in Beton oder andere feste Materialien gut eingebracht werden. Das Schlagbohren ist jedoch weniger geeignet, um hochpräzise Bohrungen, das heißt Löcher mit hochpräzisem Innendurchmesser, zu erzeugen.

Ohne das beim Schlagbohren verwendete Schlagen, benötigen übliche Bohrköpfe insbesondere bei festen Materialen jedoch relativ lange Zeit, um ein Loch mit hoher Genauigkeit zu bohren. Zwar ist es prinzipiell möglich, auch ohne die Schlagfunktion die Vorschubgeschwindigkeit des Bohrers zu erhöhen, dies hat jedoch einen deutlich erhöhten Verschleiß der Schneiden und eine herabgesetzte Oberflächenqualität zur Folge.

Ausgehend von dem beschriebenen Stand der Technik ist es daher Aufgabe der vorliegenden Erfindung, einen Werkzeugkopf, insbesondere einen Bohrkopf, und ein Verfahren bereitzustellen, mit dem hochpräzises Zerspanen mit sehr hohen Vorschubgeschwindigkeiten und guter Oberflächenqualität möglich ist, ohne dass die Schneide einem hohen Verschleiß ausgesetzt ist.

Hinsichtlich des Werkzeugkopfes wird diese Aufgabe dadurch gelöst, dass ein Konverter zur Umwandlung von elektrischer Wechselspannung in eine mechanische Schwingung vorgesehen ist, wobei der Konverter derart angeordnet, ausgelegt und mit dem Werkzeugabschnitt verbunden ist, so dass mit Hilfe des Konverters die Einheit bestehend aus Konverter und Werkzeugabschnitt und gegebenenfalls einem in der Aufnahme aufgenommenen Werkzeugeinsatz zu einer Ultraschallschwingung angeregt werden kann.

Ultraschall ist eine mechanische Schwingung oberhalb der Hörgrenze. Der Frequenzbereich beginnt bei etwa 20 KHz und erstreckt sich bis zu Frequenzen von 1 GHz. Solche Ultraschallfrequenzen werden häufig mit Hilfe von piezoelektrischen Schallwandern aus elektrischer Energie erzeugt. Dabei sind die piezoelektrischen Schallwandler auf die Geometrie des Konverters derart abgestimmt, dass durch die piezoelektrischen Schallwandler der Konverter in eine Eigenschwingung angeregt werden kann. D. h. der Konverter hat eine Länge, die einem Vielfachen der halben Wellenlänge (*n* • ^{λ}/₂ mit n= 1,2,3,4,...) der von den piezoelektrischen Schallwandlern erzeugten Ultraschallschwingung entspricht. An den Stirnflächen des Konverters bildet sich dann im angeregten Zustand ein Schwingungsmaximum aus, so dass eine gute Übertragung der Ultraschallschwingung auf den an der Stirnfläche angebrachten Werkzeugabschnitt erfolgt. Der Werkzeugabschnitt hat gegebenenfalls zusammen mit dem aufgenommenen Werkzeugeinsatz seinerseits eine Geometrie, die gewährleistet, dass der Werkzeugabschnitt bei der selben Frequenz eine Eigenschwingung aufweist. Daher hat auch der Werkzeugabschnitt eine Länge (in Richtung der Bohrachse), die einem Vielfachen der halben Wellenlänge (*n*•^{λ}/₂ mit n= 1,2,3,4,...) der von den piezoelektrischen Schallwandlern erzeugten Ultraschallschwingung entspricht.

Grundsätzlich ist es nicht notwendig, dass der Konverter direkt mit dem Werkzeugabschnitt verbunden ist. Beispielsweise kann auch ein Amplitudentransformator zwischengeschaltet sein. Der Werkzeugabschnitt dient gegebenenfalls zusammen mit dem in der Aufnahme aufgenommenen Werkzeugeinsatz als Sonotrode. Der Konverter regt somit die Ultraschallschwingeinheit bestehend aus Konverter, Werkzeugabschnitt und gegebenenfalls einem in der Aufnahme aufgenommenen Werkzeugeinsatz mit einer Eigenschwingung an, so dass sich in der Ultraschallschwingeinheit eine stehende Welle ausbildet, wobei im Bereich der Schneidkanten des Werkzeugeinsatzes ein Ultraschallschwingungsmaximum ausgebildet wird.

In einer bevorzugten Ausführungsform ist der Werkzeugkopf ein Bohrkopf, so dass der Maschinenanschluss als Spindelanschluss ausgebildet ist und der Werkzeugabschnitt entweder selbst als Bohrer dient oder eine Aufnahme für einen Bohrer aufweist. Am besten kommt ein Spiralbohrer zum Einsatz.

Aufgrund der Geometrie des Spiralbohrers führt eine longitudinale Ultraschallschwingung zusätzlich zu einer Torsionsbewegung des Spiralbohrers im Bereich der gewendelten Spannuten.

Mit anderen Worten wird bei herkömmlichen Bohrern dem Werkzeugabschnitt, insbesondere dem Spiralbohrer, eine Ultraschallschwingung aufgeprägt, was zu einem effektiveren Spanabtrag führt, ohne dass die hohe Genauigkeit beeinträchtigt wird.

In einer weiteren bevorzugten Ausführungsform ist ein eine elektrische Wechselspannung erzeugender Generator mit dem Konverter verbunden, wobei die von dem Generator erzeugte Wechselspannung eine Frequenz hat, die im Wesentlichen eine Eigenfrequenz der Einheit bestehend aus Konverter und Werkzeugabschnitt und gegebenenfalls einem in der Aufnahme aufgenommenen Spiralbohrer entspricht. Dabei versteht es sich, dass die vom Generator erzeugte Frequenz nicht exakt mit der Eigenfrequenz der Ultraschallschwingeinheit übereinstimmen muss, da leichte Abweichungen zwischen Anregungsfrequenz und Eigenfrequenz dennoch zu einer brauchbaren Ultraschallschwingung im System führen. Zudem ändert sich in dem Moment, in dem die Schneidkante des Spiralbohrer mit dem zu bearbeitenden Werkstück in Kontakt tritt, die Eigenfrequenz der Ultraschallschwingeinheit etwas, so dass es ohnehin im Betrieb zu kleineren Fehlanpassungen der Anregungsfrequenz an die Eigenfrequenz kommt.

Grundsätzlich ist es möglich, dass der Werkzeugabschnitt selbst einen als Bohrer ausgebildeten Abschnitt hat. Da jedoch der Werkzeugabschnitt relativ aufwändig hergestellt werden muss, um sicherzustellen, dass die von dem Konverter erzeugte Ultraschallschwingung tatsächlich an der Spitze des Bohrers möglichst verstärkt ankommt, und zu dem der Bohrer aufgrund seines Eingriffs mit dem zu bearbeitenden Werkstück einem nicht unerheblichen Verschleiß unterliegt, ist es stattdessen von Vorteil, wenn der Werkzeugabschnitt eine Aufnahme für einen Bohrer aufweist, so dass bei einem Verschleiß des Bohrers lediglich dieser aus der Aufnahme und durch einen anderen Bohrer ersetzt werden kann. Der Werkzeugabschnitt kann somit weiterverwendet werden.

Um eine möglichst gute Übertragung der Ultraschallschwingung auf den Spiralbohrer zu erzielen, hat sich herausgestellt, dass am besten der Spiralbohrer mittels Schrumpfsitz in der Aufnahme des Werkzeugabschnittes angeordnet ist. Mit anderen Worten hat der Spiralbohrer einen Außendurchmesser der etwas größer ist als der Innendurchmesser der Aufnahme des Werkzeugabschnittes.

Um den Spiralbohrer in der Aufnahme des Werkzeugabschnittes aufzunehmen, wird daher der Werkzeugabschnitt erwärmt und/oder der Spiralbohrer abgekühlt, so dass aufgrund der thermischen Ausdehnung der Schaft des Spiralbohrers in die Aufnahme des Werkzeugabschnittes eingeführt werden kann. Sobald Spiralbohrer und Werkzeugabschnitt wieder im Wesentlichen die gleiche Temperatur eingenommen haben, wird der Spiralbohrer fest in der Aufnahme gehalten. Diese Art der Befestigung hat darüber hinaus den Vorteil, das der Spiralbohrer auf einfache Weise reproduzierbar sehr genau in radialer Richtung positioniert werden kann, so dass sichergestellt ist, dass die Achse des Bohrers mit der Achse des Werkzeugabschnitts übereinstimmt und eine hohe Rundlaufgenauigkeit erzielt wird.

In einer bevorzugten Ausführungsform stellt die Aufnahme des Werkzeugabschnittes einen Anschlag für den Spiralbohrer bereit, der die Position des Spiralbohrers in axialer Richtung begrenzt. Durch diesen Anschlag ist sichergestellt, dass der Spiralbohrer beim Einsetzen in die Aufnahme an exakt der gewünschten Position gehalten wird. Bei der Anpassung des Werkzeugabschnittes an den Spiralbohrer kann, wie bereits eingangs ausgeführt wurde, darauf geachtet werden, dass die Stirnseite des Spiralbohrers, dass heißt der Teil des Spiralbohrers, der zuerst mit dem Werkstück in Kontakt tritt, im Bereich eines Schwingungsmaximums der Ultraschallschwingung angeordnet ist. Dies setzt voraus, dass die Spitze und damit die Hauptschneidkanten des Spiralbohrers an einer exakt vorgegebenen axialen Position liegen. Wird der Spiralbohrer zu weit in die Aufnahme geschoben oder nicht vollständig bis zur gewünschten Position in die Aufnahme geschoben, so führt dies zu einer Veränderung der Eigenfrequenz des Schwingsystems, so dass der Konverter nicht mehr optimal an die Frequenz angepasst ist und es zu nicht zu vernachlässigenden Energieverlusten kommen kann. Die Kombination aus Werkzeugabschnitt und Bohrer sollte immer ein λ/2-Schwingsystem oder ein Vielfaches hiervon sein bezogen auf die Arbeitsfrequenz des Konverters.

Grundsätzlich kann der erfindungsgemäße Bohrkopf mit handelsüblichen Spiralbohrern verwendet werden. Diese haben jedoch in der Regel unterschiedliche Längen. Daher ist in einer weiteren bevorzugten Ausführungsform vorgesehen, dass der Anschlag bewegbar ist und in mindestens zwei Positionen, die in axialer Richtung voneinander beabstandet sind, an dem Werkzeugabschnitt befestigbar ist. Der Anschlag kann dann, je nach verwendetem Spiralbohrer entsprechend eingestellt werden, so dass sichergestellt ist, dass die Spitze des Spiralbohrers an der gewünschten Position zu liegen kommt. Durch diese Maßnahme kann somit der selbe Werkzeugabschnitt für eine Vielzahl von unterschiedlich langen Spiralbohrern verwendet werden. Allerdings können nur Spiralbohrerlängenunterschiede kompensiert werden, die nicht größer als der Abstand zwischen den zwei Positionen, in denen der Anschlag am Werkzeugabschnitt befestigbar ist, sind. Sobald der Bohrer relativ zum Werkzeugabschnitt fixiert ist, z. B. mittels des genannten Schrumpfsitz kann der Anschlag vom Werkzeugabschnitt entfernt werden.

Sollen Spiralbohrer mit noch größeren Bohrerlängenunterschieden verwendet werden, so kann der Werkzeugabschnitt nicht in allen Fällen verwendet werden. Daher ist in einer bevorzugten Ausführungsform vorgesehen, dass der Werkzeugabschnitt von dem Konverter oder dem am Konverter befestigten Amplitudentransformator abnehmbar ist.

Des Weiteren ist es von Vorteil, wenn mindestens zwei Werkzeugabschnitte vorhanden sind, die wahlweise an den Konverter bzw. an den Amplitudentransformator anschließbar sind, wobei die beiden Werkzeugabschnitte in axialer Richtung eine unterschiedliche Länge haben. Mit anderen Worten ist jeder Werkzeugabschnitt für andere Spiralbohrerlängen und/oder andere Spiralbohrerdurchmesser ausgelegt, so dass je nach zu verwendendem Spiralbohrer der entsprechende Werkzeugabschnitt verwendet wird, der wiederum eine begrenzte Einstellbarkeit eines vorzugsweise enthaltenen Anschlages bereitstellen kann. Vorteilhaft ist es, wenn dem Benutzer ein Set bestehend aus einem Bohrkopf und mindestens einem, vorzugweise aber mehreren Werkzeugabschnitten, die sich untereinander unterscheiden. Der Benutzer kann dann nahezu jeden beliebigen verfügbaren Bohrer mit dem Bohrkopf verwenden. Es ist lediglich notwendig, den richtigen Werkzeugabschnitt auszuwählen und am Konverter oder am Amplitudentransformator zu befestigen.

Dabei ist in einer weitern bevorzugten Ausführungsform vorgesehen, dass Konverter und Werkzeugabschnitt derart aneinander befestigt sind, dass eines der Elemente eine Ausnehmung aufweist, in die das andere Element eingreift, wodurch eine radiale Positionierung der beiden Teile zueinander und damit eine hohe Rundlaufgenauigkeit erzielt wird. Beispielsweise ein Element einen Vorsprung mit einem konisch ausgebildeten Abschnitt aufweisen, der in die entsprechend geformte Ausnehmung des anderen Element eingreift.

In einer weiteren bevorzugten Ausführungsform weist der Werkzeugabschnitt eine in axialer Richtung verlaufende Durchgangsbohrung auf, die an ihrem einen Ende einen Abschnitt mit einem Innengewinde zur Befestigung des Werkzeugabschnittes an den Konverter oder einem am Konverter befestigten Element aufweist und das andere Ende die Aufnahme für einen Spiralbohrer darstellt. Eine solche Ausführungsform ist einfach herzustellen. Im Übrigen kann, für den Fall, dass der Spiralbohrer innen verlaufende Kühl- und/oder Schmiermittelkanäle aufweist, Kühlmittel und/oder Schmiermittel über diese Durchgangsbohrung zugeführt werden.

Ebenfalls wäre es möglich, den Werkzeugabschnitt mittels Schrumpfsitz am Konverter zu befestigen. Beim Aufwärmen ist dann aber sicherzustellen, dass die Piezoelemente nicht überhitzt und dadurch depolarisiert werden.

Hinsichtlich des Verfahrens wird die eingangs beschriebene Aufgabe gelöst durch ein Verfahren zur spanenden Bearbeitung eines Werkstücks, bei dem ein Werkzeug mit einer geometrisch bestimmten Schneidkante mit dem zu bearbeitenden Werkstück in Eingriff gebracht wird und Werkzeug und Werkstück relativ zueinander bewegt werden, wobei das Werkzeug während der Bearbeitung in eine Ultraschallschwingung versetzt wird. Grundsätzlich ist das Verfahren nicht auf die Verwendung von Bohrern beschränkt. Es wäre auch denkbar, das Bearbeitungsverfahren zum Fräsen oder Drehen zu verwenden. Wesentlich ist lediglich, dass das Werkzeug, insbesondere die mit dem zu bearbeitenden Werkstück in Kontakt tretende Schneidkante während der Bearbeitung in eine Ultraschallschwingung versetzt wird.

Wird der Werkzeugkopf mit hohen Drehzahlen, z.B. mit 20.000U/min, betrieben, so ist es für die Rundlaufgenauigkeit und die Spannungsbelastung der Bauteile von Vorteil, wenn der Bohrkopf zuvor ausgewuchtet wird. Dies kann z. B. an dafür geeigneten Auswuchtgeräten durchgeführt werden.

Weitere Vorteile, Merkmale und Anwendungsmöglichkeiten werden deutlich anhand der folgenden Beschreibung einer bevorzugten Ausführungsform und der zugehörigen Figuren. Es zeigen:
Figuren 1A und 1B eine Ausführungsform eines erfindungsgemäßen Bohrkopfes,
Figuren 2A und 2B Darstellungen des in den Figuren 1A und 1B gezeigten Werkzeugabschnittes,
Figuren 3A und 3B eine alternative Ausführungsform des Werkzeugabschnittes und
Figuren 4A und 4B den erfindungsgemäßen Bohrkopf mit dem Werkzeugabschnitt der Figuren 3A und 3B.

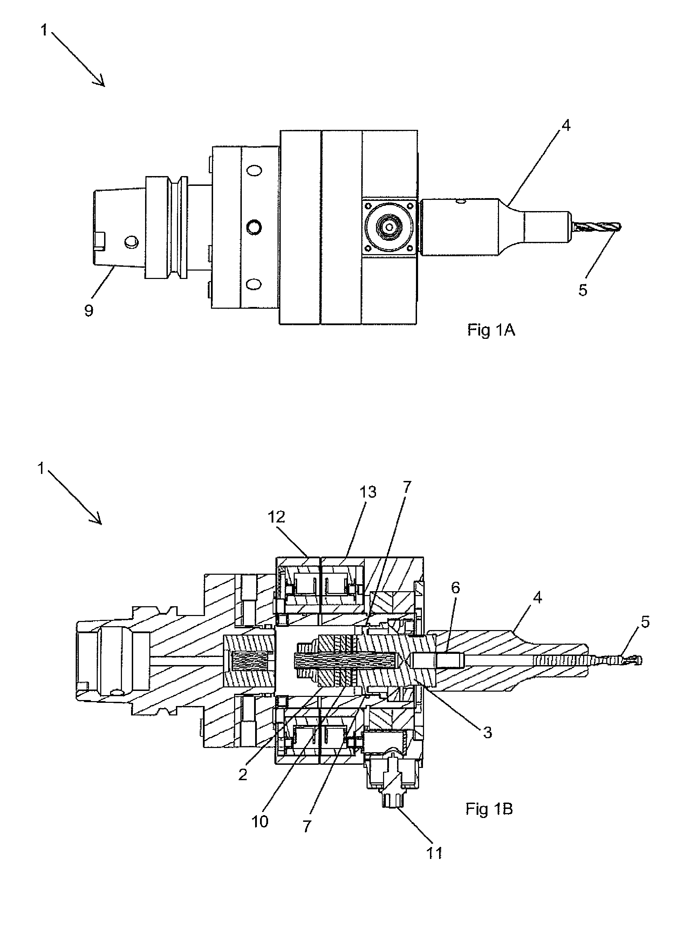

In den Figuren 1A und 1B ist eine bevorzugte Ausführungsform des erfindungsgemäßen Bohrkopfes 1 gezeigt. Figur 1A zeigt eine Seitenansicht, während Figur 1B eine Schnittansicht zeigt. Der Bohrkopf hat an seinem einen Ende einen Spindelanschluss 9, mit dem der Bohrkopf an eine drehbare Spindel angeschlossen werden kann. Der Spindelanschluss 9 ist hier als HSK-Anschluss ausgebildet, kann jedoch prinzipiell jede beliebige Form haben, so lange der Anschluss an eine drehbare Spindel möglich ist.

Der Bohrkopf 1 weist einen Konverter zur Umwandlung von elektrischer Wechselspannung in eine mechanische Ultraschallschwingung auf. Der Konverter besteht hier u. a. aus der Stahlscheibe 2, den Piezoscheiben 10 sowie dem Konverterunterteil 3. Die Stahlscheibe 2 und die Piezoscheiben 10 sind mit Hilfe einer Schraube und einer Mutter am Konverterunterteil 3 befestigt.

Der Werkzeugabschnitt 4 kann eine durchgehende Bohrung haben, in der ein Spiralbohrer 5 aufgenommen werden kann.

An der dem Spiralbohrer 5 abgewandten Seite der Durchgangsbohrung kann die Durchgangsbohrung ein Innengewinde aufweisen, mit dessen Hilfe der Werkzeugabschnitt 4 mittels einer Stiftschraube an dem Amplitudentransformator 3 befestigt werden kann. Durch den Konverter 2 kann das Schwingungssystem bestehend aus dem Konverter, dem Werkzeugabschnitt 4 und dem Spiralbohrer 5 in eine Ultraschallschwingung versetzt werden.

Um die Übertragung der Ultraschallschwingung auf den Bohrkopf möglichst gering zu halten, ist diese Ultraschallschwingeinheit mit Hilfe des Halters 7 am Bohrkopf befestigt. Die Halter 7 können an einem Punkt an der Ultraschallschwingeinheit eingreifen, in der die longitudinale Ultraschallschwingung ein Schwingungsminimum hat.

Durch eine besondere geometrische Ausgestaltung der Halterung kann die Dickenschwingung, d.h. die Querschwingung, des Schwingsystems, die an dieser Stelle kein Minimum zeigt, aufgenommen werden, ohne dass diese an das Gehäuse des Bohrkopfs übertragen wird.

Die Geometrische Ausführung der Halterung 7 muss auch berücksichtigen dass auftretende Kräfte vom Bohrer (Axial und Torsional) übertragen werden kann.

Ebenso müssen zentrifugale Kräfte die bei hohen Drehzahlen auftreten können aufgenommen werden.
daher sind an dieser stelle "weiche" Lagerungen wie z.B. O-Ringe nicht sinnvoll einzusetzen

Im Grunde genommen bilden der Werkzeugabschnitt 4 und der Spiralbohrer 5 zusammen eine Sonotrode. Die einzelnen Bauteile der Ultraschallschwingeinheit sind derart aneinander angepasst, dass bei korrekter Positionierung des Spiralbohrers 5 innerhalb der Aufnahme des Werkzeugabschnittes 4 an der Spitze des Spiralbohrers ein Maximum der longitudinalen Ultraschallschwingung auftritt und im Bereich des Halters 7 ein Schwingungsminimum auftritt.

Die notwendige Energieversorgung erfolgt über den Anschluss 11. Zur Übertragung der Energie zu dem sich drehenden Konverter ist ein Drehkoppler 12, 13 vorgesehen, der aus einem stationären Teil 13 und einem sich drehenden Teil 12 besteht.

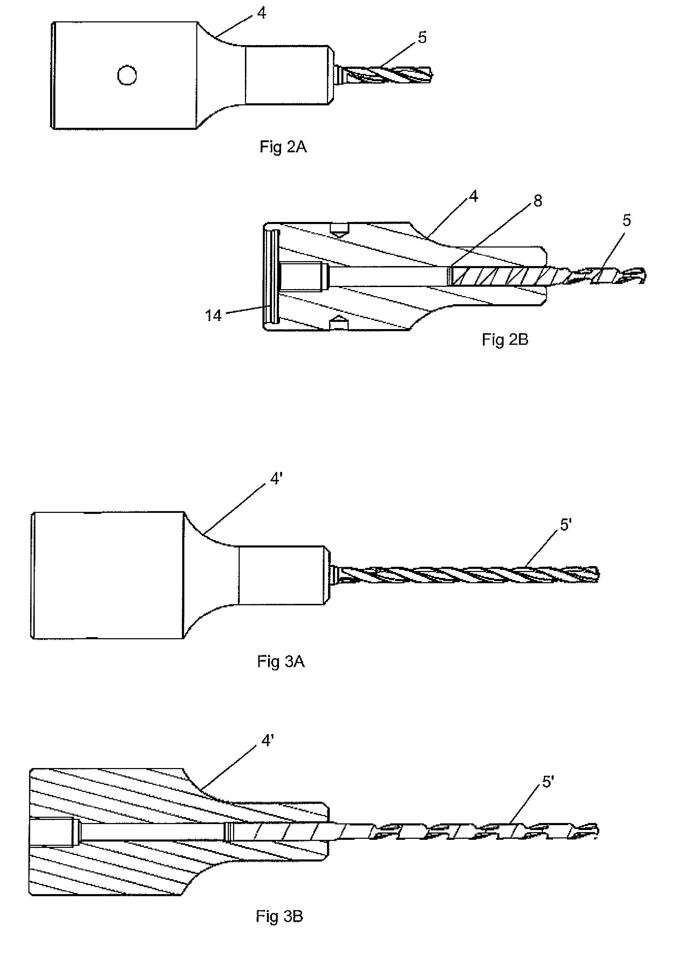

In den Figuren 2A und 2B ist der Werkzeugabschnitt 4 noch einmal vergrößert dargestellt. Man erkennt, dass der Werkzeugabschnitt 4 im Bereich seiner Durchgangsbohrung einen Anschlag 8 aufweisen kann, der die axiale Position des Spiralbohrers 5 in der Aufnahme des Werkzeugabschnittes 4 festlegt. Der Werkzeugabschnitt 4 kann auf den Spiralbohrer 5 abgestimmt sein, so dass sich an der Spitze des Spiralbohrers 5 ein Schwingungsmaximum der longitudinalen Ultraschallschwingung bildet.

Grundsätzlich können handelsübliche Spiralbohrer verwendet werden. Wird ein längerer Spiralbohrer verwendet, so muss dieser, falls der Werkzeugabschnitt 4 der Figuren 2A und 2B verwendet werden soll, weiter in die Aufnahme hineingeschoben werden, sofern dies der Anschlag 8 zulässt. Dies ist jedoch nur für Spiralbohrer möglich, die sich in ihrer Länge nicht zu sehr unterscheiden. Soll stattdessen ein Spiralbohrer verwendet werden, der eine deutlich andere Länge hat, ist es notwendig, den Werkzeugabschnitt 4 von dem Bohrkopf 1 zu trennen und durch einen anderen Werkzeugabschnitt zu ersetzen.

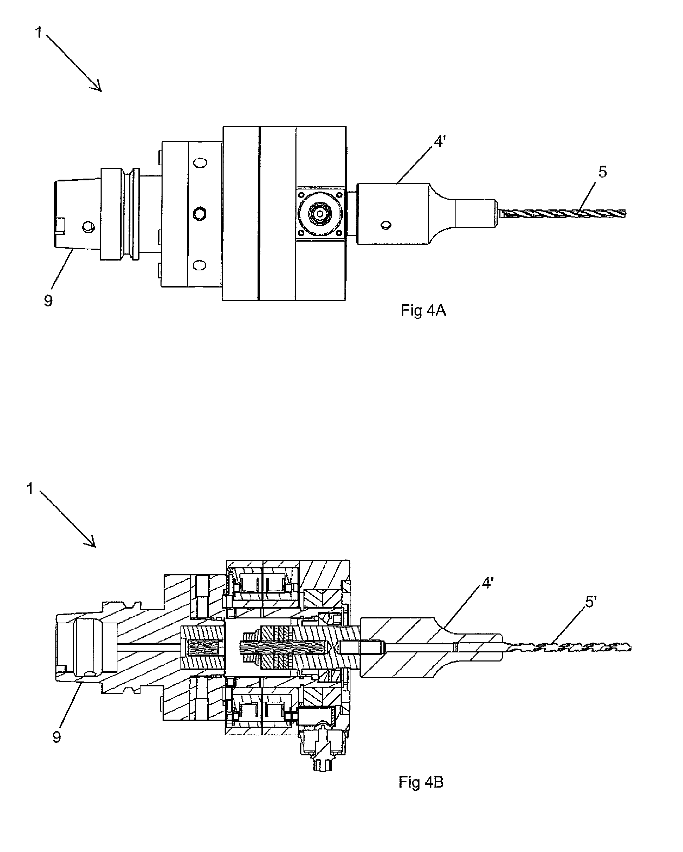

Ein anderer Werkzeugabschnitt ist in den Figuren 3A und 3B gezeigt, die eine Draufsicht und eine Schnittansicht zeigen. Der hier gezeigte Werkzeugabschnitt 4' weist in axialer Richtung eine größere Ausdehnung auf, so dass der im Vergleich zu dem in den Figuren 2A und 2B gezeigten Spiralbohrer längere Spiralbohrer 5' aufgenommen werden kann. Der in den Figuren 3A und 3B gezeigte Werkzeugabschnitt 4' kann mit dem Bohrkopf, der in den Figuren 1 gezeigt ist, verbunden werden. Diese Situation ist in den Figuren 4A und 4B gezeigt.

Der in den Figuren 2A und 2B gezeigte Werkzeugabschnitt weist an seiner dem Konverter zugewandten Seite eine Ausnehmung 14 auf, deren Innenkontur auf die Außenkontur des Konverterunterteils 3 abgestimmt ist. Dadurch wird sichergestellt, dass der Werkzeugabschnitt immer in radialer Richtung exakt positioniert ist und eine sehr gute Rundlaufgenauigkeit erzielt wird. Grundsätzlich wäre hier aber auch eine Schrumpfsitzverbindung oder eine konusförmige Verbindung denkbar.

Durch den erfindungsgemäßen Bohrkopf können daher mit handelsüblichen Spiralbohrern und handelsüblichen Bohrmaschinen hochpräzise Bohrlöcher mit hoher Vorschubgeschwindigkeit erzielt werden.

### Bezugszeichenliste

- 1: Bohrkopf
- 2: Scheibe
- 3: Konverterunterteil
- 4, 4': Werkzeugabschnitt
- 5, 5': Spiralbohrer
- 6: Gewindebohrung
- 7: Halter
- 8: Anschlag
- 9: Spindelanschluss
- 10: Piezoscheiben
- 11: Anschluss
- 12,13: Drehkoppler
- 14: Ausnehmung

## Patentansprüche

1. Werkzeugkopf mit einem Maschinenanschluss zum Anschluss des Werkzeugkopfes an eine Werkzeugmaschine und einem Werkzeugabschnitt, der entweder zumindest eine geometrisch bestimmte Schneide aufweist oder eine Aufnahme für einen Werkzeugeinsatz mit einer geometrisch bestimmten Schneide aufweist, **dadurch gekennzeichnet, dass** ein Konverter zur Umwandlung von elektrischer Wechselspannung in eine mechanische Schwingung vorgesehen ist, wobei der Konverter derart angeordnet, ausgelegt und mit dem Werkzeugabschnitt verbunden ist, so dass mit Hilfe des Konverters die Einheit bestehend aus Konverter und Werkzeugabschnitt und gegebenenfalls einem in der Aufnahme aufgenommenen Werkzeugeinsatz zu einer Ultraschallschwingung mit einer Wellenlänge λ angeregt werden kann.

2. Werkzeugkopf nach Anspruch 1, **dadurch gekennzeichnet, dass** der Werkzeugkopf als Bohrkopf ausgebildet ist, der Maschinenanschluss ein Spindelanschluss zum Anschluss des Bohrkopfes an eine von einer Werkzeugmaschine angetriebenen Spindel ist und dass der Werkzeugabschnitt entweder als Bohrer ausgebildet ist oder eine Aufnahme für einen Bohrer aufweist.

3. Werkzeugkopf nach Anspruch 1, **dadurch gekennzeichnet, dass** ein eine elektrische Wechselspannung erzeugender Generator mit dem Konverter verbunden ist und dass die von dem Generator erzeugte Wechselspannung eine Frequenz hat, die im wesentlichen einer Eigenfrequenz der Einheit bestehend aus Konverter und Werkzeugabschnitt und gegebenenfalls einem in der Aufnahme aufgenommenen Werkzeugeinsatz entspricht.

4. Werkzeugkopf nach einem der Ansprüche 1 bis 3, **dadurch gekennzeichnet, dass** der Werkzeugabschnitt eine Aufnahme für ein Werkzeug aufweist, und dass in der Aufnahme ein Werkzeug mittels Schrumpfsitz angeordnet ist, wobei vorzugsweise das Werkzeug ein Bohrer ist.

5. Werkzeugkopf nach einem der Ansprüche 1 bis 4, **dadurch gekennzeichnet, dass** der Werkzeugabschnitt eine Aufnahme für ein Werkzeug aufweist und dass die Aufnahme einen Anschlag für das Werkzeug bereitstellt, der die Position des Werkzeuges in einer Richtung begrenzt, wobei vorzugsweise der Anschlag bewegbar ist und in mindestens zwei Positionen, die voneinander beabstandet sind, an dem Werkzeugabschnitt befestigbar ist.

6. Werkzeugkopf nach Anspruch 5, **dadurch gekennzeichnet, dass** der Anschlag von einem Element bereitgestellt wird, das von dem Werkzeugabschnitt abnehmbar ist.

7. Werkzeugkopf nach einem der Ansprüche 1 bis 6, **dadurch gekennzeichnet, dass** der Werkzeugabschnitt von dem Werkzeug abnehmbar ist und dass mindestens zwei Werkzeugabschnitte vorhanden sind, die wahlweise an den Werkzeugkopf anschließbar sind, wobei die beiden Werkzeugabschnitte eine unterschiedliche Größe haben.

8. Werkzeugkopf nach Anspruch 7, **dadurch gekennzeichnet, dass** entweder der Werkzeugabschnitt eine Ausnehmung aufweist, die derart ausgebildet ist, dass der Konverter oder ein am Konverter befestigter Stift in der Ausnehmung aufgenommen werden kann, oder der Konverter eine Ausnehmung aufweist, die derart ausgebildet ist, dass der Werkzeugabschnitt oder ein am Werkzeugabschnitt befestigter Stift in der Ausnehmung aufgenommen werden kann.

9. Werkzeugkopf nach Anspruch 7 oder 8, **dadurch gekennzeichnet, dass** der Werkzeugabschnitt eine Durchgangsbohrung aufweist, die an ihrem einen Ende einen Abschnitt mit einem Innengewinde zu Befestigung des Werkzeugabschnittes an dem Konverter oder einem am Konverter befestigten Element hat und das andere Ende die Aufnahme für einen Werkzeugeinsatz darstellt.

10. Werkzeugkopf nach einem der Ansprüche 1 bis 9, **dadurch gekennzeichnet, dass** der Werkzeugabschnitt gegebenenfalls zusammen mit einem in der Aufnahme aufgenommenen Werkzeugeinsatz eine Länge hat, die einem Vielfachen der halben Wellenlänge (*n* • ^{λ}/₂ mit n= 1,2,3,4,...) der Ultraschallschwingung entspricht.

11. Werkzeugkopf nach einem der Ansprüche 1 bis 10, **dadurch gekennzeichnet, dass** der Konverter eine Länge hat, die einem Vielfachen der halben Wellenlänge (*n* • ^{λ}/₂ mit n= 1,2,3,4,...) der Ultraschallschwingung entspricht.

12. Verfahren zur spanenden Bearbeitung eines Werkstücks bei dem ein Werkzeug mit einer geometrisch bestimmten Schneidkante mit dem zu bearbeitenden Werkstück in Eingriff gebracht wird und Werkzeug und Werkstück relativ zueinander bewegt werden, **dadurch gekennzeichnet, dass** das Werkzeug während der Bearbeitung in eine Ultraschallschwingung versetzt wird.

13. Verfahren nach Anspruch 12, **dadurch gekennzeichnet, dass** als Werkzeug ein Bohrer und vorzugsweise ein Spiralbohrer verwendet wird.

14. Verfahren nach Anspruch 12 oder 13, **dadurch gekennzeichnet, dass** ein Werkzeugkopf nach einem der Ansprüche 1 bis 11 verwendet wird.
